# EUROPEAN PATENT APPLICATION

(11) **EP 2 481 465 A1**
(43) Date of publication of application: **01.08.2012**
(21) Application number: 09849744.9
(22) Date of filing: 24.09.2009
(51) Int. Cl.: B01D 53/14, B01D 53/62, C01B 31/20

(54) **CARBON DIOXIDE ABSORBENT SOLUTION**

(71) Applicant: Kabushiki Kaisha Toshiba, Minato-ku Tokyo 105-8001 (JP)
(72) Inventor: MURAI, Shinji, Minato-ku,Tokyo (JP); SAITO, Satoshi, Minato-ku,Tokyo (JP); MURAMATSU, Takehiko, Minato-ku,Tokyo (JP); MAEZAWA, Yukishige, Minato-ku,Tokyo (JP); KUBOKI, Takashi, Minato-ku ,Tokyo (JP); KATO, Yasuhiro, Minato-ku,Tokyo (JP); YOSHIMURA, Reiko, Minato-ku,Tokyo (JP); WATANDO, Hiroko, Minato-ku ,Tokyo (JP); KONDO, Asato, Minato -ku,Tokyo (JP)
(74) Representative: Granleese, Rhian Jane
(86) International application number: PCT/JP2009/004833
(87) International publication number: WO 2011/036713

(57) **Abstract**

An object of the present invention is to provide a carbon dioxide absorbing solution capable of avoiding precipitation of a product formed by the reaction with carbon dioxide. The absorbing solution is an aqueous solution characterized by containing an amino acid salt comprising at least one carboxylic acid salt connected to a heterocyclic ring including at least one nitrogen atom as the ring member atom.

## Description

### TECHNICAL FIELD

This invention relates to a carbon dioxide absorbing solution that removes carbon dioxide from mixed gases.

### BACKGROUD ART

Recently, the rising atmospheric concentration of carbon dioxide has been regarded as one of the causes of the global warming phenomenon, and hence a trend toward reduction in CO₂ emission has been growing. As a method for separating carbon dioxide from the atmosphere, there is known a process comprising the steps of: making carbon dioxide react with a CO₂ absorbing solution containing an absorbent, to form a product; and then recovering the product. The recovered product is thereafter decomposed into carbon dioxide and the absorbent, so as to reproduce the CO₂ absorbing solution.

Alkanol amines are generally known as the absorbent contained in the CO₂ absorbing solution, but they exhibit slow CO₂ absorption and desorption rates. In view of this, there is disclosed an absorbent mixture for separating carbon dioxide (see, Patent document 1). The disclosed mixture is characterized by containing a chain amino acid salt as the absorbent.

### PRIOR ART DOCUMENTS

[Patent document 1] Japanese Patent Laid-Open No. 2008-136989

### DISCLOSURE OF INVENTION PROBLEM TO BE SOLVED BY THE INVENTION

However, when reacting with carbon dioxide, the above absorbent mixture for separating carbon dioxide precipitates a product, which is hard to decompose into carbon dioxide and the absorbent. Accordingly, it is difficult to reuse the absorbent in a CO₂ absorbing solution.

To cope with this problem, it is an object of the present invention to provide a carbon dioxide absorbing solution capable both of absorbing carbon dioxide in a large amount and of avoiding precipitation of the product formed by the reaction with carbon dioxide.

### MEANS FOR SOLVING PROBLEM

In order to achieve the above object, the present invention provides a carbon dioxide absorbing solution consisting of an aqueous solution containing an amino acid salt in which at least one carboxylic acid salt is connected to a heterocyclic ring including at least one nitrogen atom as the ring member atom.

The carbon dioxide absorbing solution of the present invention contains, as the absorbent, an amino acid salt in which at least one carboxylic acid salt is connected to a heterocyclic ring including at least one nitrogen atom as the ring member atom. Because of this amino acid salt, the absorbing solution of the present invention absorbs a large amount of carbon dioxide and exhibits high CO₂ absorption and desorption rates. Further, in the solution according to the present invention, the product formed by the reaction with carbon dioxide is less precipitated.

### EFFECT OF THE INVENTION

According to the present invention, it becomes possible to obtain a carbon dioxide absorbing solution which absorbs a large amount of carbon dioxide and in which the product formed by the reaction with carbon dioxide is less precipitated.

### BEST MODE FOR CARRYING OUT THE INVENTION

The following describes a carbon dioxide absorbing solution according to one embodiment of the present invention. The carbon dioxide absorbing solution is an aqueous solution containing an absorbent capable of reacting with carbon dioxide. In this embodiment, the absorbing solution is alkaline. The carbon dioxide absorbing solution is circulated between an absorption tower, where carbon dioxide is absorbed, and a regeneration tower, where the absorbent is separated from the product formed by absorbing carbon dioxide. Between the absorption tower and the regeneration tower, there are provided two pipes: one is a pipe through which the absorbing solution is sent from the absorption tower to the regeneration tower, and the other is a pipe through which the solution is sent back from the regeneration tower to the absorption tower. In the absorption tower, the absorbent reacts at room temperature with carbon dioxide included in exhaust gases emitted from factories or power plants, to form a product. In the regeneration tower, the carbon dioxide is separated from the product at high temperature to regenerate the carbon dioxide absorbing solution, which is then reused in the absorption tower.

The compound represented by the following formula (1) is an example of the absorbent contained in the carbon dioxide absorbing solution of Example 1 according to the present invention.

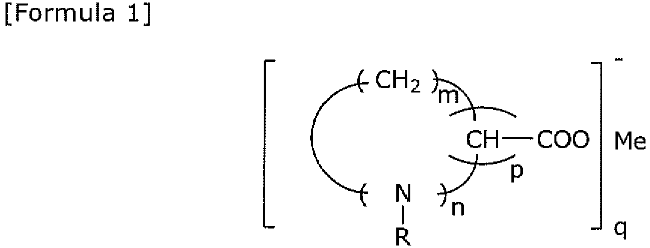

The absorbent of the formula (1) is an amino acid salt having a molecular structure including a heterocyclic ring formed by m+p carbon atoms and n nitrogen atoms. Among the m+p carbon atoms, p carbon atoms are individually connected to carboxylic acid salts. In the formula (1), R is H or a substituted or unsubstituted alkyl or aromatic group having 1 to 18 carbon atoms, and each of m, n and p is independently an integer of 1 or more.

The ring-member carbon and nitrogen atoms may be connected to each other in any order. For example, the carbon atoms may be continuously connected and then the nitrogen atoms may be continuously connected, or otherwise the carbon and nitrogen atoms may be regularly or irregularly connected.

Each ring-member nitrogen atom is locally included in a secondary amino group having one hydrogen atom or otherwise in a tertiary amino group having functional groups other than hydrogen atom.

When carbon dioxide is brought into contact with the absorbing solution containing the absorbent of the formula (1), the absorbent reacts with the carbon dioxide according to:

(1) *CO₂*+*2R₂NH* (absorbent) -> *R₂NCOO⁻*+*R₂NH₂*⁺

if having a heterocyclic ring comprising a nitrogen atom included in a secondary amino group (R₂NH).

On the other hand, if having a heterocyclic ring comprising a nitrogen atom included in a tertiary amino group (R₃N), the absorbent reacts according to:

(II) *CO₂*+*R₃N* (absorbent)+*H₂O* -> *R₃NH*⁺+*HCO₃*⁻.

The absorbent of the formula (1), which has a cyclic structure, exhibits high molecular polarizability because of the cyclic structure. That is because the amino group is highly nucleophilic while the carboxylic acid salt is highly electrophilic in the molecule.

If the ring-member nitrogen atom is locally included in a secondary amino group, the absorbent of the formula (1) reacts with carbon dioxide according to (I) to produce products represented by the following formulas (2) and (3); and on the other hand, if the ring-member nitrogen atom is locally included a tertiary amino group, the absorbent of the formula (1) reacts according to (II) to produce a product represented by the following formula (4) and hydrogen carbonate ion (HCO₃⁻).

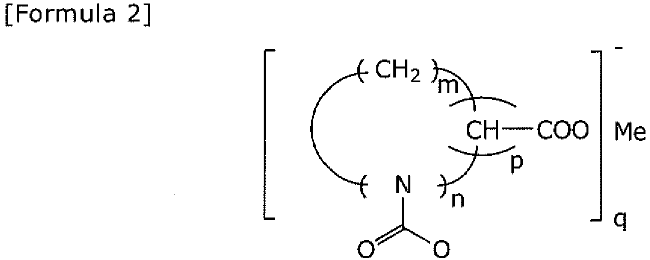

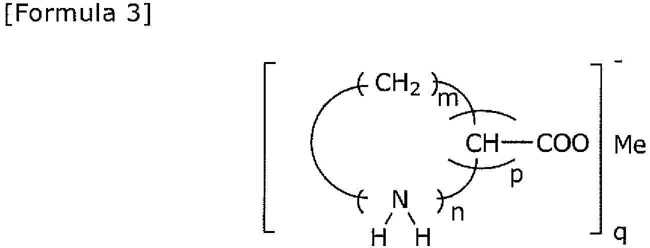

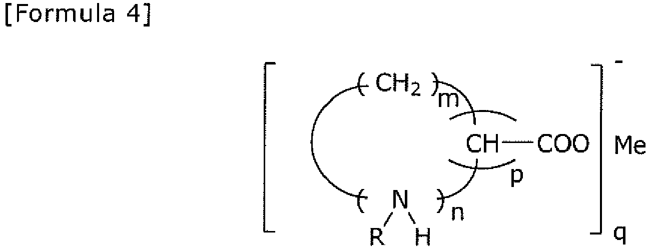

As shown in (I) and (II), carbon dioxide is attracted to the amino group of the absorbent and then reacts with it. Accordingly, the more nucleophilic the amino group is, the more the carbon dioxide is attracted. The absorbent of the formula (1) thus readily reacts with carbon dioxide, and hence exhibits a high CO₂ absorption rate.

The reaction of (I) or (II) can be made to proceed reversely by heating the products formed by the reaction between the absorbent of the formula (1) and carbon dioxide, so as to separate the carbon dioxide from the products and thereby to regenerate the absorbent. This reverse reaction is conducted in a regeneration tower. In general, polarizabilities of cyclic amino acids greatly decrease when the acids are heated, as compared with when they are not. Accordingly, the amino group in the heated absorbent of the formula (1) less attracts carbon dioxide so that the carbon dioxide is desorbed in a large amount.

Further, the higher polarizability the absorbent has, the more it can be dissolved in the carbon dioxide absorbing solution. That is because the absorbing solution is an aqueous solution. The amount of CO₂ absorption per volume of the absorbing solution increases according to increase of the absorbent content in the solution. Since thus absorbing carbon dioxide in a large amount and exhibiting a high CO₂ absorption rate, the absorbing solution can absorb a large amount of carbon dioxide in a short time. In addition, since desorbing a large amount of the absorbed carbon dioxide, the absorbing solution can be repeatedly used.

All the products represented by the formulas (2), (3) and (4), which are formed by the reaction between the absorbent of the formula (1) and carbon dioxide, have cyclic structures, and hence they have high polarizability and are highly water-soluble. Accordingly, they are less precipitated.

Further, since member atoms in cyclic structures are generally combined with each other more strongly than in chain structures, the absorbent used in the absorbing solution of the present invention less decomposes even if regenerated repeatedly.

The absorbent according to the present invention is a salt and hence less volatilizes. That is because salts generally have very small vapor pressures. The absorbent contained in the absorbing solution of the present invention is a carboxylic acid salt and hence less volatilizes, and accordingly the amount of carbon dioxide absorbed in the absorbing solution less decreases even if the absorbent is repeatedly regenerated.

In the case where the heterocyclic ring comprises a nitrogen atom locally included in a secondary amino group, two molecules of the absorbent are necessary for absorbing one CO₂ molecule However, in the case where the heterocyclic ring comprises a nitrogen atom locally included in a tertiary amino group, only one molecule of the absorbent is necessary for absorbing one CO₂ molecule. Accordingly, the CO₂ recovering efficiency in the latter case is higher than that in the former case.

The p carboxyl groups connected to the member carbon atoms of the heterocyclic ring are individually combined with desired metal atoms Me to form salts. The metal atoms are preferably alkali metals such as K, Na and Cs, which enhance polarizability of the molecule.

The carboxylic acid salts are thus included in the absorbent contained in the absorbing solution of the present invention, and therefore there is no fear that the amount of absorbed carbon dioxide may decrease. If the absorbent includes free carboxyl groups instead of the carboxylic acid salts, the carboxyl groups are in the form of carboxyl ions having negatively-charged oxygen atoms because the absorbing solution is alkaline. On the other hand, in the absorbing solution, one hydrogen atom is attached to the nitrogen atom in each amino group of the absorbent to form an amino ion in which the nitrogen atom is positively charged. Accordingly, the negatively charged oxygen atoms in the carboxyl ions are easily combined with the positively charged nitrogen atoms of the amino groups. As a result, carbon dioxide cannot be combined with the amino groups of the absorbent, so as to decrease the amount of carbon dioxide absorbed in the absorbing solution. However, since the absorbent according to the present invention does not include free carboxyl groups but carboxylic acid salts, carboxyl ions are hardly formed even in the alkaline absorbing solution and therefore there is no fear that the amount of absorbed carbon dioxide may decrease.

The amino acid salt represented by the formula (1), in which at least one carboxylic acid salt is connected to a heterocyclic ring including at least one nitrogen atom as the ring member atom, may be an absorbent 1 represented by the formula (3) or an absorbent 2 represented by the formula (5). In addition, other examples of the amino acid salt include: azacyclopropyl-2-carboxylic acid salt, azacyclopropane-1,2-dicarboxylic acid salt, azetidine-2-carboxylic acid salt, azetidine-3-carboxylic acid salt, azetidine-2,3-dicarboxylic acid salt, azetidine-2,4-dicarboxylic acid salt, azetidine-2,3,4-tricarboxylic acid salt, pyrrolidine-2carboxylic acid salt (proline salt), pyrrolidine-3-carboxylic acid salt, pyrrolidine-2,3-dicarboxylic acid salt, pyrrolidine-2,4-dicarboxylic acid salt, pyrrolidine-2,5-dicarboxylic acid salt, pyrrolidine-2,3,4-tricarboxylic acid salt, pyrrolidine-2,3,5-tricarboxylic acid salt, pyrrolidine-2,3,4,5-tetracarboxylic acid salt, piperidine-2-carboxylic acid salt (pipecolinic acid salt), piperidine-3-carboxylic acid salt, piperidine-4-carboxylic acid salt, piperidine-2,3-dicarboxylic acid salt, piperidine-2,4-dicarboxylic acid salt, piperidine-2,5-dicarboxylic acid salt, piperidine-2,6-dicarboxylic acid salt, piperidine-3,4-dicarboxylic acid salt, piperidine-3,5-dicarboxylic acid salt, piperidine-2,3,4-tricarboxylic acid salt, piperidine2,3,5-tricarboxylic acid salt, piperidine-2,3,6-tricarboxylic acid salt, piperidine-3,4,5-tricarboxylic acid salt, and hexahydro-1H-azepine-2-carboxylic acid salt.

Each of the above absorbents, as well as the absorbent 1 or 2, has a heterocyclic ring including a nitrogen atom as the ring member atom, and hence can absorb and desorb a large amount of carbon dioxide and further can exhibit a high CO₂ absorption rate.

In the carbon dioxide absorbing solution of the present invention, the absorbent preferably has a heterocyclic ring formed by 3 to 8 member atoms. If the ring is formed by more than 8 member atoms, the absorbent often has such a large molecular weight that its water-solubility may be lowered.

The heterocyclic ring may comprise two or more nitrogen member atoms. However, if they are locally included in secondary amino groups, the number thereof is preferably 4 or less. If the ring comprises 5 or more secondary amino groups, the nitrogen atoms are intramolecularly attracted to each other and consequently the polarizability of the molecule may decrease to lower the amount of absorbed carbon dioxide.

Further, it is also preferred that 4 or less carboxylic acid salts be connected to the carbon member atoms of the heterocyclic ring. If there are 5 or more carboxylic acid salts in one molecule of the absorbent, the abundance ratio of the amino groups in the molecule becomes relatively so small that the polarizability may decrease to lower the amount of absorbed carbon dioxide.

The heterocyclic ring in the absorbent, which is contained in the carbon dioxide absorbing solution of the present invention, indispensably comprises at least one carbon atom and at least one nitrogen atom, but may comprise other kinds of atoms as the ring member atoms.

The ring-member carbon atom may be connected to a hydroxyl group; a primary, secondary or tertiary amino group; a sulfonic acid group; a substituted or unsubstituted straight-chain or branched-chain alkyl group having 1 to 18 carbon atoms; a substituted or unsubstituted aromatic group; or the like.

The carbon dioxide absorbing solution according to the present invention contains the absorbent in an amount of preferably 1 to 50 wt%. If the amount is 1% or less, the solution absorbs a less amount of carbon dioxide per volume. On the other hand, if the amount is 50% or more, the absorbing solution is so viscous that it flows too slowly to circulate between the absorption and regeneration towers.

In addition to the absorbent of the formula (1), the carbon dioxide absorbing solution may contain one or more kinds of amine compounds. The amine compounds are, for example, chain or cyclic alkanol amines having primary amino groups, chain or cyclic alkanol amines having secondary amino groups, chain or cyclic alkanol amines having tertiary amino groups, or heterocyclic amine compounds containing nitrogen atoms as the ring member atoms.

The above amine compounds have the following characteristics and functions. The nitrogen atom included in the primary amino group improves the CO₂ absorption rate immediately after carbon dioxide is brought into contact with the absorbing solution. On the other hand, the nitrogen atom included in the secondary amino group improves the CO₂ absorption rate immediately before the amount of absorbed carbon dioxide reaches the saturation point. The nitrogen atom included in the tertiary amino group increases the CO₂ absorption capacity. Further, if the tertiary amino group is contained, the CO₂ absorption and desorption can be repeated in such good balance that only a small amount of energy is consumed to separate the absorbent from the products.

The energy consumed in the step of separating the absorbent from the absorbing solution occupies about 50 to 80% of the total energy consumed in all the steps of solution circulation between the absorption and desorption towers. Accordingly, the total energy consumption can be reduced by decreasing the energy consumption in the step of separating the absorbent.

As described above, if incorporated into the carbon dioxide absorbing solution of the present invention, the amine compounds enhance the performance of the absorbing solution. For example, they can further improve the CO₂ absorption rate, can further increase the amount of absorbed carbon dioxide or can reduce the energy for regenerating the absorbing solution.

Examples of the chain amine compounds include: monoethanolamine, 2-methylaminoethanol, 2-ethylaminoethanol, 2-propylaminoethanol, n-butyl-aminoethanol, 2-(isopropylamino)ethanol, 3-ethylaminopropanol, triethanolamine, and diethanolamine.

Examples of the cyclic amine compounds include: piperazine, 2-methylpiperazine, 1,4-diazabicyclo[2.2,2]octane, hexamethylenetetramine, pyrrolidine, piperidine, azetidine, octahydroazocine, and octahydro-LH-azepine.

In the case where the amine compounds are incorporated into the carbon dioxide absorbing solution of the present invention, the amount thereof is preferably not more than 10 times as large as the amount of the absorbent. If it is more than 10 times as large as the amount of the absorbent, the amine compounds may be significantly vaporized, decomposed or deposited. That is because the amine compounds are generally easy to be vaporized, decomposed or deposited.

Besides the above compounds and water, the carbon dioxide absorbing solution of the present invention may further contain other compounds in desired amounts. They are, for example, a nitrogen-containing compound for improving the absorbability, an anti-oxidizing agent and a pH regulator.

### (Example 1)

Examples of the absorbent represented by the formula (1) include an absorbent 1 represented by the following formula (5):

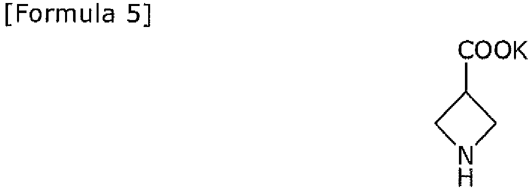

The absorbent 1 is potassium 1-aza-azetidine-3-carboxylate, which includes potassium carboxylate and a 4-membered ring formed by three carbon atoms and one nitrogen atom. Among the three ring-member carbon member atoms, the carbon atom positioned opposite to the nitrogen atom is connected to the potassium carboxylate.

The carboxyl group in the absorbent 1 is combined with a potassium ion to form a salt.

The absorbent 1 undergoes the reaction represented by (I) with carbon dioxide, to produce the products represented by the following formulas (6) and (7):

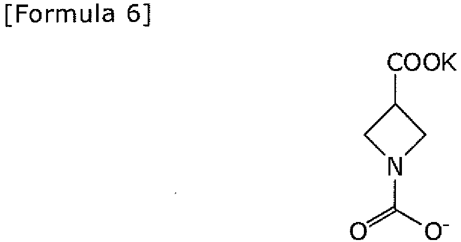

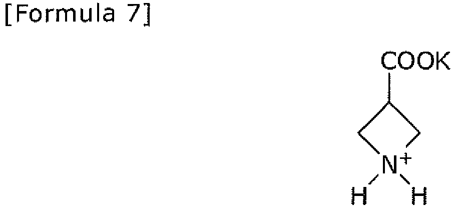

Examples of the absorbent represented by the formula (1) also include an absorbent 2 represented by the following formula (8):

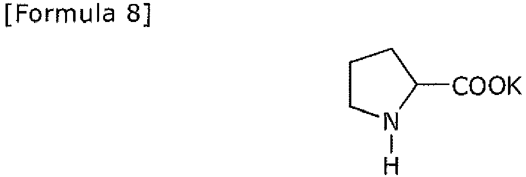

The absorbent 2 is a pyrrolidine-2-carboxylic acid salt, which includes a carboxylic acid salt and a 5-membered ring formed by four carbon atoms and one nitrogen atom. One of the four ring-member carbon atoms is connected to the ring-member nitrogen atom. This means that the absorbent 2 is an a-amino acid, which comprises a carbon atom connected to both amino group and carboxyl group.

In the case where both amino group and carboxyl group are connected to the same carbon atom, the polarizability of the molecule is relatively large because the amino group and the carboxyl group are positioned close to each other, as compared with the case where the amino group and the carboxyl group are individually connected to different carbon atoms. The absorbent 1 thus has high polarizability of the molecule and hence has high water-solubility, and accordingly the absorbing solution containing the absorbent 1 can absorb a large amount of carbon dioxide.

The carboxyl group in the absorbent 2 is combined with a potassium ion to form a salt.
The absorbent 2 undergoes the reaction represented by (I) with carbon dioxide, to produce the products represented by the formulas (9) and (10):

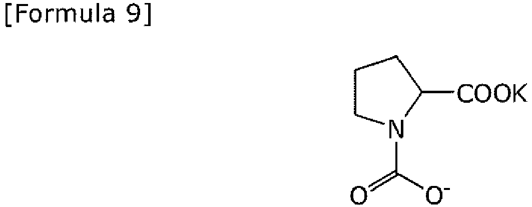

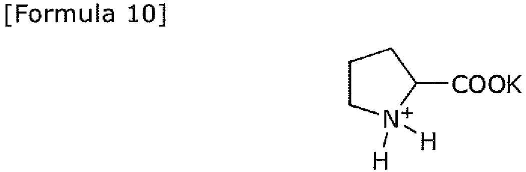

With respect to each of the absorbents 1 and 2, there were evaluated the amount of absorbed carbon dioxide per volume of the absorbing solution, the CO₂ absorption rate, the CO₂ desorption rate, the vapor pressure of the absorbent, and the solubility in water. The results were set forth in Table 1.

They were measured in the following manner.

Water and 1-azaazetidine-3-carboxylic acid were mixed and stirred to prepare a homogeneous solution, to which an aqueous solution of potassium hydroxide was then added and made to react at room temperature. Thereafter, water was distilled off to obtain potassium 1-azaazetidine-3-carboxylate (absorbent 1).

Into 50 ml of a 20 wt% aqueous solution of the absorbent 1 (carbon dioxide absorbing solution 1), 20% CO₂ gas was bubbled for 60 minutes at 40°C. The concentration of carbon dioxide in the solution was then measured to obtain the amount of absorbed carbon dioxide per volume. Further, the CO₂ absorption rate was also calculated from the 75% value of the maximum absorbed CO₂ amount and the time it took to reach the 75% value from the beginning of bubbling.

After the CO₂ bubbling was completed, the absorbent 1 aqueous solution was left at 70°C and the concentration of carbon dioxide was measured to obtain the CO₂ desorption rate.

Independently, in a 1 wt% absorbent 1 solution (50 mL), sodium methyl sulfonate was dissolved in an amount of 1 wt%. The obtained solution was left for 60 minutes at 140°C, and then the concentration of the absorbent 1 was measured by means of ¹H-NMR to determine the decreased amount of the absorbent 1. According to the decreased amount, the volatility was evaluated. The less the decreased amount was, the less volatile the absorbent was regarded as. In general, if containing a less volatile absorbent, the absorbing solution can be repeatedly regenerated without decrease of the absorbent content.

Meanwhile, the absorbent 1 was added in 100 mL of water. If 100 g or more of the absorbent 1 completely dissolved therein, it was regarded as soluble. If not, it was regarded as insoluble.

The absorbent 2 in a 20 wt% aqueous solution (carbon dioxide absorbing solution 2) was also subjected to the same measurements.

Further, an aqueous solution containing 15 wt% of the absorbent 2 and 5 wt% of piperazine as a reaction accelerator (carbon dioxide absorbing solution 3) and an aqueous solution containing 15 wt% of the absorbent 2 and 5 wt% of methyl diethanolamine as a reaction accelerator (carbon dioxide absorbing solution 4) were prepared and subjected to the above measurements. Their water-solubilities were evaluated by use of a powdery mixture of the absorbent 2 and piperazine (4:1) and a powdery mixture of the absorbent 2 and methyl diethanolamine (4:1), respectively.

Piperazine and methyl diethanolamine are represented by the following formulas (10) and (11), respectively. Since both piperazine and methyl diethanolamine have poor water-solubilities, the absorbing solutions may absorb carbon dioxide in small amounts if they are singly incorporated therein. However, since they are highly reactive with carbon dioxide, the solutions containing them together with the absorbent 2 can absorb carbon dioxide more than the solution containing the absorbent 2 alone.

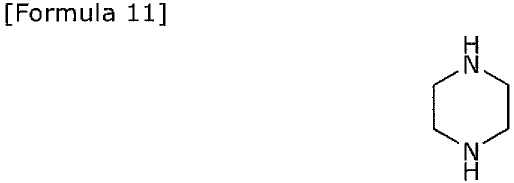

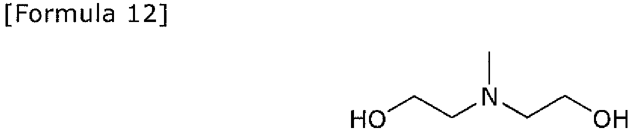

For the purpose of comparing chain amino acid salts with the amino acid salts according to the present invention, a 20 wt% aqueous solution of valine potassium salt (comparative solution 1) and a 20 wt% aqueous solution of methylaminoethanol (comparative solution 2) were prepared and subjected to the above measurements. The valine potassium salt and methylaminoethanol are represented by the following formulas (12) and (13), respectively: 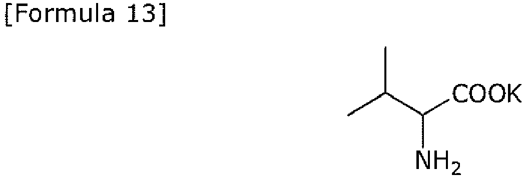 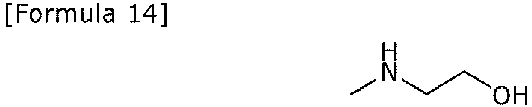 [Table 1]

**Table 1**

| | Absorbed amount | Absorption rate | Desorbed amount | Volatility | Solubility |
|---|---|---|---|---|---|
| | (g/L) | (g/L•min) | (g/L) | (%) | |
| Carbon dioxide absoring solutions 1 | 65 | 6 | 6 | 0 | soluble |
| Carbon dioxide absoring solution 2 | 70 | 6.5 | 7 | 0 | soluble |
| Carbon dioxide absoring solution 3 | 75 | 7 | 7 | 10 | soluble |
| Carbon dioxide absoring solution 4 | 60 | 4 | 7 | 3 | soluble |
| Comparative solution 1 | 30 | 3 | 3 | 0 | insoluble |
| Comparative solution 2 | 60 | 5 | 3 | 30 | soluble |

As for the amount of absorbed carbon dioxide, the carbon dioxide absorbing solutions 1 to 4 absorbed 65 g/L, 70 g/L, 75 g/L and 60 g/L of carbon dioxide, respectively, while the comparative solutions 1 and 2 absorbed 30 g/L and 60 g/L of carbon dioxide, respectively. Accordingly, it was verified that the solutions containing the absorbents of cyclic structures absorbed more amounts of carbon dioxide.

As for the CO₂ absorption rate, the carbon dioxide absorbing solutions 1 to 4 exhibited 6 g/(L•min), 6.5 g/(L•min), 7 g/(L•min) and 4 g/(L•min), respectively, while the comparative solutions 1 and 2 exhibited 3 g/(L•min) and 5 g/(L•min), respectively. Accordingly, it was verified that the solutions containing the absorbents of cyclic structures tended to exhibit higher CO₂ absorption rates.

As for the CO₂ desorption rate, the carbon dioxide absorbing solutions 1 to 4 exhibited 6 g/(L•min), 7 g/(L•min), 7 g/(L•min) and 7 g/(L•min), respectively, while the comparative solutions 1 and 2 exhibited 3 g/(L•min) and 3 g/(L•min), respectively. Accordingly, it was verified that the solutions containing the absorbents of cyclic structures exhibited higher CO₂ desorption rates.

As for the volatility (amount of decreased absorbent), the carbon dioxide absorbing solutions 1 to 4 exhibited 0%, 0%, 10% and 3%, respectively, while the comparative solutions 1 and 2 exhibited 0% and 30%, respectively. The absorbents did not volatilize from the absorbing solutions 1 and 2. Further, although the absorbents volatilized from the absorbing solutions 3 and 4, that was presumed to be due to vaporization of piperazine and methyl diethanolamine. Meanwhile, although the absorbent did not volatilize from the comparative solution 1, the comparative solution 2 lost the absorbent in a large amount. Those results indicate that the absorbents 1 and 2 hardly volatilize.

As for the water-solubility, each of the samples other than the comparative solution 2 was so water-soluble that 100 g or more thereof dissolved completely in 100 mL of water.

It was also verified that the absorbents 1 and 2 did not precipitate in the absorbing solutions even if absorbing carbon dioxide to form products.

As described above, the absorbing solution containing the absorbent represented by the formula (1), particularly, the solution containing the absorbent 2, which is an α-amino acid represented by the formula (8), is capable of absorbing and desorbing a large amount of carbon dioxide and exhibits a high CO₂ absorption rate, and hence it can recover a great deal of carbon dioxide in a short time. Further, that absorbent is highly water-soluble and less volatilizes from the absorbing solution, and accordingly there is no fear of deterioration in the amount of absorbed carbon dioxide and in the CO₂ absorption rate even if the absorbing solution is repeatedly used.

The following procedure gives an example of preparing an absorbent of the present invention. The absorbent is an amino acid salt comprising a carboxylic acid salt connected to a heterocyclic ring including at least one nitrogen atom as the ring member atom. Accordingly, an amino acid comprising a carboxylic acid salt connected to a heterocyclic ring including at least one nitrogen atom as the ring member atom is made to undergo a neutralization reaction with a metal hydroxide in such an amount that the molar ratio of the metal hydroxide may be slightly smaller than that of the amino acid, so as to prepare the absorbent according to the present invention. Specifically, the amino acid, in which a carboxylic acid salt is connected to a heterocyclic ring including at least one nitrogen atom as the ring member atom, is added into deionized water in such an amount that the weight ratio thereof may be 1 to 100:1. Into the obtained solution, a 10 to 90 wt% metal hydroxide aqueous solution containing the metal hydroxide in such an amount that the molar ratio of the metal hydroxide to the amino acid may be in the range of 0.97 to 0.99 is dropped for 1 to 60 minutes. The resultant solution is stirred for 12 hours at most, so that the reaction may proceed sufficiently to obtain the amino acid salt.

The carbon dioxide absorbing solution according to an embodiment of the present invention contains an absorbent having a cyclic structure, and hence can absorb and desorb carbon dioxide more than that containing an absorbent having a chain structure. Further, the absorbing solution of the present invention can enhance the CO₂ absorption rate. Furthermore, in the carbon dioxide absorbing solution of the present invention, products formed by the reaction with carbon dioxide are less precipitated. In addition, the absorbent contained in the absorbing solution of the present invention less decomposes and can be made less volatile by selecting the kind and amount of the amine compound contained together, and therefore the carbon dioxide absorbing solution of the present invention can be repeatedly used.

## Claims

1. A carbon dioxide absorbing solution consisting of an aqueous solution containing an amino acid salt in which at least one carboxylic acid salt is connected to a heterocyclic ring including at least one nitrogen atom as the ring member atom.

2. The carbon dioxide absorbing solution according to claim 1, wherein said amino acid salt is a cyclic α-amino acid salt.

3. The carbon dioxide absorbing solution according to claim 2, wherein said amino acid salt is an amino acid alkali salt.

4. The carbon dioxide absorbing solution according to claim 3, which further contains an amine compound.

5. The carbon dioxide absorbing solution according to claim 4, wherein said amine compound is an alkanol amine.
